(19) Europäisches Patentamt
European Patent Office
Office européen des brevets

(11) Veröffentlichungsnummer: **0 154 775 B1**

(12) # EUROPÄISCHE PATENTSCHRIFT

(45) Veröffentlichungstag der Patentschrift: **20.09.89**

(51) Int. Cl.[4]: **C 08 G 59/40**, C 08 G 59/14

(21) Anmeldenummer: **85100578.5**

(22) Anmeldetag: **21.01.85**

(54) **Wasserdispergierbare Bindemittel auf der Basis von modifizierten Epoxid-Amin-Addukten, deren Herstellung und Verwendung.**

(30) Priorität: **14.03.84 DE 3409189**

(43) Veröffentlichungstag der Anmeldung: **18.09.85 Patentblatt 85/38**

(45) Bekanntmachung des Hinweises auf die Patenterteilung: **20.09.89 Patentblatt 89/38**

(84) Benannte Vertragsstaaten: **AT BE DE FR GB IT NL SE**

(56) Entgegenhaltungen: **DE–A– 2 537 387**

(73) Patentinhaber: **BASF Lacke + Farben Aktiengesellschaft
Max-Winkelmann-Strasse 80
D-4400 Münster (DE)**

(72) Erfinder: **Ott, Günther, Dr.
von Holte Strasse 101 a
D-4400 Münster-Wolbeck (DE)**
Erfinder: **Dobbelstein, Arnold, Dr.
Emil Nolde Weg 95
D-4400 Münster (DE)**
Erfinder: **Geist, Michael, Dr.
Rubensstrasse 251
D-4400 Münster (DE)**
Erfinder: **Schön, Georg, Dr.
Schillerstrasse 2
D-4416 Everswinkel (DE)**
Erfinder: **Ahlers, Klaas, Dr.
Föhrenweg 21
D-4400 Münster (DE)**

(74) Vertreter: **Habbel, Hans-Georg, Dipl.-Ing.
Postfach 3429 Am Kanonengraben 11
D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 154 775 B1

Jouve, 18, rue St-Denis, 75001 Paris, France

**Beschreibung**

Die Erfindung betrifft wasserdispergierbare Bindemittel auf der Basis von modifizierten Epoxid-Amin-Addukten. Die Erfindung richtet sich insbesondere auf kationisierbare harzartige Reaktionsprodukte, die auf seitenkettenmodifizierten Epoxidharzen basieren, und deren Herstellung und Verwendung als Überzugsmittel, insbesondere für die kathodische Elektrotauchlackierung.

Der Einsatz von kathodisch abscheidbaren Harzen in der Elektrotauchlackierung ist Stand der Technik. Aufgrund des deutlich besseren Korrosionsschutzverhaltens der kataphoretischen Beschichtungen auf Eisensubstraten wurden die anodischen Elektrotauchlacke auf Gebieten mit höherem Anforderungsprofil, wie bei der Grundierung von Automobilkarossen weitgehend verdrängt.

Die kathodisch abscheidbaren Materialien enthalten in der Regel stickstoffbasische Bindemittel, die bei Zusatz eines Vernetzungsmittels fremdvernetzend, oder auch selbstvernetzend oder unter Kondensation härtbar sind. Diese stickstoffbasischen Trägerharze sind in vielen Fällen Umsetzungsprodukte von Epoxidharzen mit Aminen. Dem generellen Vorteil eines besseren Korrosionsschutzverhaltens solcher stickstoffbasischer Harze stehen jedoch oft Probleme anderer Natur entgegen. Die wäßrigen Dispersionen neigen oft zu Ausfällerscheinungen, besonders stark in Gegenwart eines zugesetzten Vernetzungsmittels. Mangelhaftes Fließverhalten der Harze führt zu rauhen Oberflächen der Beschichtungen. Darüber hinaus sind solche Beschichtungen durch ihre Sprödigkeit bei Deformation des Substrates, zum Beispiel bei Steinschlagbelastung, stark gefährdet und neigen zu Abplatzungen.

Eine Klasse von kathodisch abscheidbaren Harzen, die diese Mängel weitgehend vermeidet, leitet sich von kettenverlängerten Epoxidharzen ab. So sind in der DE-PS 27 01 002 Polyepoxide beschrieben, die durch organische Polyole wie Polyesterdiole oder Polyetherdiole in ihrer Kette verlängert sind. Diese kettenverlängerten Epoxidharze werden durch Umsetzung mit einem sekundaren Amin wasserdispergierbar und können kathodisch abgeschieden werden.

Ein Problem jedoch, das bei der Kettenverlängerung mit solchen polymeren Polyolen auftritt, besteht in dem Vorhandensein von konkurrierenden Reaktionen. Unter den Bedingungen der Kettenverlängerung, die in der Regel in Gegenwart eines Aminkatalysators stattfindet, konkurrieren Epoxy-Epoxyreaktionen und Reaktionen von Epoxygruppen mit sekundären Hydroxylgruppen mit der gewünschten Reaktion zwischen der polymeren Hydroxylgruppe und der Epoxidgruppe. Die konkurrierenden Reaktionen können so viel von den Epoxidgruppen verbrauchen, daß ein Überschuß von Amin in dem Reaktionsprodukt vorhanden ist, daß die Dispersionseigenschaften des entstandenen Harzes und sein Umgriff und die Filmbildungseigenschaften beeinträchtigt werden. Außerdem können diese Konkurrenzreaktionen, wenn sie nicht ausreichend kontrolliert werden, Produktionsschwierigkeiten bereiten, zum Beispiel die Ausbildung einer zu hohen Viskosität des Harzes, was wahrscheinlich auf einer Verzweigung des Polymeren beruht.

Wenn die Viskosität nicht sorgfältig überwacht wird, kann sehr schnell eine Gelierung der Mischung eintreten. Derartige Vorgänge können besonders bei der industriellen Produktion zu Problemen führen.

Es wurde nun gefunden, daß die eingangs genannten Mängel dieser kathodisch abscheidbaren Bindemittel vermieden werden können, indem man Amine mit seitenkettenmodifizierten Epoxidharzen umsetzt. Diese Seitenkettenmodifizierung kann dadurch erreicht werden, daß man Polyepoxide in einem an sich bekannten Verfahren mit Diphenolverbindungen umsetzt, wobei die Diphenolverbindungen jedoch zusätzliche Seitenketten enthalten. Die seitenkettentragenden Diphenolverbindungen sind durch Veresterung von Diphenylolalkansäuren mit hydroxylgruppenhaltigen Substraten zugänglich. Die Aufbaureaktion der erfindungsgemäßen Bindemittel verläuft mit hoher Selektivität, wobei die konkurrierenden Nebenreaktionen auf ein Minimum reduziert sind. Das führt zu Harzen, die besonders auch im industriellen Maßstab kontrollierbar herzustellen sind, und die überraschenderweise sich bei der kathodischen Elektrotauchlackierung mit erhöhter Spannungsfestigkeit abscheiden lassen, wobei die Beschichtungen eine ausgezeichnete Flexibilität aufweisen.

Der Erfindung lag die Aufgabe zugrunde, neue wasserdispergierbare Bindemittel aufzuzeigen, die mit verbesserter Reproduzierbarkeit herstellbar sind, und die darüber hinaus die eingangs geschilderten Mängel vermeiden.

Gegenstand der Erfindung sind daher wasserdispergierbare säureneutralisierte Bindemittel für Überzugsmittel, und insbesondere für die kathodische Elektrotauchlackierung auf der Basis von modifizierten Epoxid-Amin-Addukten, dadurch gekennzeichnet, daß sie hergestellt worden sind durch

I) Umsetzen von

(A) Polyepoxiden mit einer Epoxidäquivalenz größer als eins und einem mittleren Molekulargewicht $\bar{M}_n$ von 140 bis 5 000 mit
(B) Diphenylolalkansäureestern und
(C) Aminen sind.
zu einem modifizierte Epoxidharz und

II) Protonisierung dieses Zwischenproduktes aus (I) mit einer wasserlöslichen Säure.

Bei der Erfindung findet ein Aufbau von seitenkettenmodifizierten Epoxidharzen durch Umsetzung von Polyepoxiden (Komponente A) mit Diphenylolalkansäureestern (Komponente B) statt, wobei das Verhältnis von Epoxidgruppen zu den Phenylolgruppen der Komponente B so gewählt wird, daß ein genügender Restgehalt an Epoxidgruppen für die Umsetzung mit den Aminen (Komponente C) verbleibt, so daß eine hinreichende Wasserdispergierbarkeit gewährleistet ist. Das Aufbauverfahren, das zu diesen seitenkettenmodifizierten Epoxidharzen führt, vollzieht sich über einen Reaktionstyp, der im Prinzip in der Technik bekannt ist, und der beispielsweise auch bei der Herstellung kommerzieller Epoxidharze vom Bisphenol A- oder Bisphenol F-Typ mitunter angewandt wird. Es findet dabei zwischen den Epoxidgruppen und den phenolischen OH-Gruppen eine bei entsprechender Katalyse weitgehend nebenreaktionsfreie Umsetzung unter Molekülvergrößerung statt.

Die Reihenfolge der Umsetzung der Komponenten A, B und C ist nicht erfindungswesentlich. In typischer Weise wird die Komponente A zuerst mit der Komponente B in Gegenwart eines Katalysators, wie eines Phosphoniumsalzes, zum Beispiel Ethyltriphenylphosphoniumacetat oder Ethyltriphenylphosphoniumjodid oder einer Metallverbindung zum Beispiel Zinn(II)-acetat reagiert, wonach sich die Umsetzung mit dem Amin (Komponente C) ausschließt. Alternativ kann das Polyepoxid zuerst mit einem Amin oder einer Mischung von Aminen umgesetzt werden, woran sich dann die Umsetzung mit der Komponente B anschließt. In diesem Fall wirken die Amine gleichzeitig als Katalysatoren für die Umsetzung der Komponente B mit den Epoxygruppen des Polyepoxids. Das Reaktionsprodukt kann dann durch Behandeln mit einer Säure wasserdispergierbar gemacht werden.

Als Polyepoxide können bei der vorliegenden Erfindung alle niedermolekularen Verbindungen sowie höhermolekularen Polymere verwendet werden, sofern sie im Mittel mehr als eine Epoxidgruppe pro Molekül enthalten. Bevorzugt sind Epoxidverbindungen mit zwei oder mehr Epoxidgruppen im Molekül.

Die bevorzugten Polyepoxide sind Polyglycidylether von cyclischen Polyolen. Besonders bevorzugt sind Polyglycidylether von Polyphenolen, wie Bisphenol A oder Bisphenol F. Diese Polyepoxide können durch Veretherung eines Polyphenols mit einem Epihalogenhydrin oder einem Dihalogenhydrin, wie Epichlorhydrin oder Dichlorhydrin in Gegenwart von Alkali hergestellt werden. Beispiele von Polyphenolen sind 2,2-Bis(4-hydroxyphenyl)propan, 1,1-Bis-(4-hydroxyphenyl)ethan, 2-Methyl-1,1-bis(4-hydroxyphenyl)-propan, 2,2-Bis(4-hydroxy-3-tertiärbutylphenyl)propan, Bis-(2-hydroxynaphthyl)methan und 1,5-Dihydroxy-3-naphthalin.

Außer Polyphenolen können andere cyclische Polyole für die Herstellung der Polyglycidylether von cyclischen Polyolderivaten verwendet werden. Beispiele von anderen cyclischen Polyolen sind alle cyclischen Polyole, insbesondere cycloaliphatische Polyole, wie 1,2-Cyclohexandiol, 1,4-Cyclohexandiol, 1,2-Bis(hydroxymethyl)cyclohexan, 1,3-Bis(hydroxymethyl)cyclohexan und hydriertes Bisphenol A.

Auch oxalkylierte Addukte, wie Ethylen- und Propylenoxiaddukte von diesen alicyclischen Polyolen und Polyphenolen können als cyclische Polyolkomponente verwendet werden.

Beispiele von anderen Polyepoxiden sind Polyglycidylether von mehrwertigen Alkoholen, wie Ethylenglykol, Diethylenglykol, Triethylenglykol, 1,2-Propylenglykol, 1,3-Propylenglykol, 1,4-Butylenglykol und 1,5-Pentandiol.

Polyglycidylester von Polycarbonsäuren, die man durch Umsetzung von Epichlorhydrin oder einer ähnlichen Epoxyverbindung mit einer aliphatischen oder aromatischen Polycarbonsäure erhält, können ebenfalls verwendet werden. Beispiele von geeigneten Polycarbonsäuren sind Dicarbonsäuren, wie Adipinsäure, Bernsteinsäure, Glutarsäure, Terephthalsäure und dimerisierte Linolensäure.

Eine andere geeignete Klasse von Polyepoxiden sind Polyglycidylether von phenolischen Novolakharzen oder ähnlichen Polyphenolharzen.

Auch Polyepoxide, die man durch Epoxidierung einer olefinisch ungesättigten alicyclischen Verbindung erhält, sind bei der Erfindung brauchbar. Derartige Polyepoxide schließen Diepoxide oder höhere Epoxide und auch Mischungen von Epoxiden ein, die z. T. ein oder mehrere Monoepoxide enthalten. Diese Polyepoxide sind nicht-phenolisch und werden durch Epoxidierung von alicyclischen Olefinen erhalten, z. B. mit Sauerstoff und ausgewählten Metallkatalysatoren, mit Perbenzoesäure, mit Acetaldehydmonoperacetat oder mit Peressigsäure. Beispiele von solchen Polyepoxiden sind 1.5-Diepoxycyclooctan und Isomere des Dicyclopentadien-dioxids.

Unter Polyepoxiden (Komponente A) sind auch solche Epoxidharze zu verstehen, die erst während der Reaktion in situ erzeugt werden. Derartige Epoxidharze werden erhalten, indem man einem niedermolekularen Epoxidharz A Anteile eines Kettenverlängerungsmittels B zusetzt, wobei das Äquivalentverhältnis von A zu B größer als eins ist, und unter Molekulargewichtsvergrößerung zu einem Harz C ausreagiert, das wiederum epoxidgruppenterminiert ist. Als Beispiele seien Epoxidharze aus der Bisphenol A- oder der Bisphenol F-Reihe genannt, die aus derartigen Umsetzungen mit den genannten Bisphenolen resultieren und als Handelsprodukte breite Verwendung finden.

Das Äquivalentverhältnis von Diphenolalkansäureester (Komponente B) zu Polyepoxid (Komponente A) sollte kleiner als eins und bevorzugt 0.1 bis 0.9 und besonders bevorzugt 0.4 bis 0.8 sein. Die Reaktion wird so geführt, daß die phenolischen OH-Gruppen der Komponente B im wesentlichen voll umgesetzt werden und ein Überschuß an Epoxygruppen für die Anlagerung der Amine verbleibt.

Die Komponente B kann ein Veresterungsprodukt einer Diphenylolalkansäure mit einem Monoalkohol, Polyalkohol oder auch einem hydroxylgruppenhaltigen Präpolymer sein. Diphenylolalkansäuren sind

Verbindungen der Formel

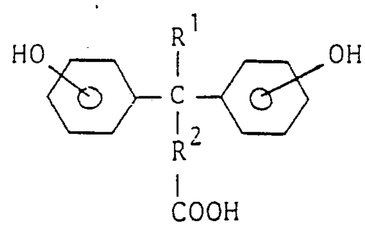

wobei $R^1$ Wasserstoff oder einen Alkylrest darstellt, $R^2$ eine Alkylenbrücke $C_nH_{2n}$ mit $n = 0$ bis 8 bedeutet, und die Hydroxylgruppen im allgemeinen in der ortho- und/oder bevorzugt in der para-Stellung der Phenylreste sich befinden.

Bevorzugte Diphenylolalkansäuren sind beispielsweise 4,4-Bis-(4-hydroxyphenyl)-essigsäure, im folgenden auch als Diphenylolessigsäure bezeichnet, und 4,4-Bis-(4-hydroxyphenyl)-valeriansäure, im folgenden auch als Diphenylolvaleriansäure bezeichnet.

Die alkoholische Veresterungskomponente B kann ein beliebiger aliphatischer oder cycloaliphatischer oder aromatischer Alkohol sein. Als Beispiele seien auszugsweise genannt: Methanol, Ethanol, Propanol, Butanol, Pentanol, Hexanol, Heptanol, Octanol, Nonanol, Decanol sowie deren verzweigte Isomere. Bevorzugt sind längerkettige und/oder verzweigte Alkohole wie beispielsweise 2-Ethylhexanol, Isodecanol, 2,2-Dimethylpropanol-1 oder Cyclohexanol.

Auch ungesättigte Alkohole sind bei der vorliegenden Erfindung brauchbar, wie beispielsweise Allylalkohol oder Oleylalkohol.

Als alkoholische Esterkomponente sind prinzipiell auch Diole geeignet. Diole können jedoch bei der Veresterung mit Diphenylolalkansäuren difunktionell reagieren und auf diese Weise Diphenylolalkansäureester bilden, die bis zu vier Phenylolgruppen im Molekül enthalten. Da eine zu hohe Phenylolfunktionalität bei der Umsetzung mit den zuvor genannten Polyepoxiden jedoch die Endviskosität des erfindungsgemäßen Harzes in unerwünschter Weise steigert, sind bei der Herstellung der Komponente B in diesem Falle besondere Maßnahmen zu ergreifen. So kann bei der Veresterung der Diphenylolalkansäure das Diol im Überschuß eingesetzt werden, und nach Beendigung der Reaktion der überschüssige Diolanteil gegebenenfalls wieder unter Vakuum aus dem Reaktionsgemisch abdestilliert werden. Beispiele von hierfür einsetzbaren Diolen sind Ethylenglykol, Propandiol-1.2, Propandiol-1.3, Butandiol-1.4 sowie Neopentylglykol.

Andererseits ist es auch möglich, ein Diol in äquivalenten Mengen umzusetzen, wobei Diphenylolalkansäureester resultieren, die im Mittel vier epoxidreaktive Phenylolgruppen im Molekül enthalten. In diesem Falle ist es vorteilhaft, einen Anteil bis zu 75 % der phenolischen OH-Gruppen anschließend mit Monoepoxiden umzusetzen, um auf diese Weise die Funktionalität der Komponente B zu reduzieren und bei der nachfolgenden Umsetzung mit den Polyepoxiden (Komponente A) einer Gelierung des Reaktionsgemisches vorzubeugen. In solchen Fällen sind neben den bereits oben genannten Diolen auch nichtflüchtige Diole mit höherem Molekulargewicht einsetzbar. Vorteilhaft geeignet sind beispielsweise Hexandiol-1.6, Cyclohexandimethanol, Decandiol-1.10, 2-Ethyl-2-n-butylpropandiol-1.3 und Hydroxypivalinsäureneopentylglykolester.

Beispiele von solchermaßen geeigneten Diolen schließen auch polymere Diole wie Polyalkylenetherdiole oder Polyesterdiole mit ein, wie sie in der DE-OS 31 08 073 in anderem Zusammenhang beschrieben sind. Bevorzugte polymere Diole sind die Poly(oxytetramethylen)glykole mit einem Molekulargewicht im Bereich von 500 bis 3 000 sowie die Polycaprolactondiole, die durch ringöffnende Polymerisation von ε-Caprolacton mit Diolen erhalten werden, und deren Molekulargewichte im Bereich von 500 bis 3 000 liegen.

Besonders geeignete Alkoholkomponenten zur Herstellung der Komponenten B sind Präpolymere, die im Mittel nur eine Hydroxylgruppe im Molekül enthalten, wie Polyetheralkohole oder Polyesteralkohole. Derartige einwertige Polyetheralkohole erhält man in einfacher Weise durch Oxyalkylierung eines Alkohols, wie Methanol, Ethanol oder anderer Alkanole, mit einem Alkylenoxid. Geeignete Alkylenoxide sind Ethylenoxid, 1.2-Propylenoxid und 1.2-Butylenoxid. Andere geeignete einwertige Alkohole sind die im Handel als « Glykolether » erhältlichen Produkte, die Monoalkylether von anderen Polyalkylenglykolen sind. Die besonders geeigneten Polyesteralkohole resultieren beispielsweise aus der Veresterung von Monoalkoholen und Diolen mit Dicarbonsäuren im Molverhältnis 1 zu $n + 1$, wobei $n = 0$ bis 15 sein kann.

Für die Herstellung solchermaßen geeigneter Polyesteralkohole existiert eine große Variationsbreite an Ausgangsstoffen. Neben den bereits oben genannten Beispielen für Monoalkohole und Diole sind als Dicarbonsäurekomponenten organische Dicarbonsäuren oder ihre Anhydride einsetzbar, wie beispielsweise Terephthalsäure, Phthalsäureanhydrid, Tetrahydrophthalsäureanhydrid, Maleinsäureanhydrid, Adipinsäure, Azelainsäure und dimerisierte Fettsäuren.

Eine besonders vorteilhaft geeignete Klasse von Polyesteralkoholen stellen die Polylactonalkohole dar, die sich aus der ringöffnenden Polymerisation von Lactonen mit Monoalkoholen ergeben. Besonders bevorzugt sind Polycaprolactonalkohole, die sich entsprechend von ε-Caprolacton ableiten. Die

Polycaprolactonalkohole werden hergestellt, indem man 1 mol eines Monoalkohols mit n molen ε-Caprolacton in Gegenwart eines Katalysators, wie Dibutylzinndilaurat, bei erhöhten Temperaturen zur Umsetzung bringt, wobei ein Polycaprolactonalkohol entsteht, der eine endständige Hydroxylgruppe trägt. Das Molekulargewicht der erfindungsgemäß eingesetzten Polyesteralkohole liegt im Bereich von 200 bis 3 000, bevorzugt im Bereich von 300 bis 1 000.

Zur Herstellung der Komponente B wird nun eines der zuvor beschriebenen hydroxylgruppenhaltigen Substrate zusammen mit der Diphenylolalkansäure zur Reaktion gebracht, wobei unter Wasserabspaltung die Veresterung erfolgt. Die Reaktionstemperatur liegt in der Regel bei 100 °C bis 200 °C, günstigerweise bei 140 °C bis 180 °C. Die Reaktion kann in Abwesenheit oder in Gegenwart eines geeigneten Lösungsmittels durchgeführt werden. Vorteilhafterweise kann das Veresterungswasser jedoch durch Zugabe eines Schleppmittels, wie beispielsweise Toluol oder Xylol, ausgekreist werden. Um die Umsetzung zu beschleunigen, ist die Zugabe von Veresterungskatalysatoren, wie beispielsweise p-Toluolsulfonsäure, sauren Ionenaustauscherharzen oder Metallsalzen angebracht. Die Reaktion wird so lange fortgeführt, bis die Säurezahl des Reaktionsgemisches kleiner 5 und bevorzugt kleiner 1 Milligramm KOH pro Gramm Produkt beträgt.

Im Falle der Verwendung von äquivalenten Mengen eines Diols als hydroxylgruppenhaltigem Substrat wird das analog dem vorgehend beschriebenen Verfahren erhaltene Veresterungsprodukt vor oder während der Umsetzung mit der Komponente B zusätzlich mit solchen Mengen eines Monoepoxids umgesetzt, daß die mittlere Phenylenfunktionalität der resultierenden Komponente B 1 bis 3 und bevorzugt 2 pro Molekül beträgt. Die Umsetzung des Monoepoxids mit den Phenylolgruppen erfolgt zweckmäßig in Gegenwart von Katalysatoren, wie beispielsweise den eingangs genannten Phosphoniumsalzen oder Metallsalzen. Als Monoepoxide sind beispielsweise geeignet Ethylenoxid, Propylenoxid, Butylenoxid, n-Butylglycidylether, Allylglycidylether, Phenylglycidether, 2-Ethylhexylglycidether oder Versaticsäureglycidylester.

Die für die Umsetzung mit der Epoxidverbindung als Komponente C verwendeten Amine können primär, sekundär oder tertiär sein, wobei sekundäre Amine besonders gut geeignet sind. Primäre und sekundäre Amine können direkt an den Epoxidring angelagert werden, tertiäre beispielsweise über eine weitere funktionelle Gruppe im Molekül. Bevorzugt sollte das Amin eine in Wasser lösliche Verbindung sein. Beispiele solcher Amine sind Mono- und Di-alkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z. B. Methylethanolamin, Diethanolamin und dergleichen. Die Verwendung von Alkanolaminen ist bevorzugt.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Ferner sind Polyamine wie Dialkylaminoalkylamine geeignet, wie beispielsweise Dimethylaminoethylamin, Diethylaminoethylamin, Diethylaminopropylamin und dergleichen. In einer besonderen Ausführungsform können derartige Amine vor der Umsetzung mit dem Polyepoxid zunächst mit äquimolaren Mengen eines Monoepoxids umgesetzt werden, wobei Amine mit einer sekundären und einer tertiären Aminogruppe und einer zusätzlichen Hydroxylgruppe resultieren. Spezifische Beispiele solcher hydroxylgruppenhaltiger Diamine sind N,N-Dimethyl-N'-2-hydroxyethyl-propylendiamin, N,N-Dimethyl-N'-2-hydroxyethylneopentyldiamin sowie 2-Hydroxyethylpiperazin.

Die Umsetzung des Amins mit der epoxygruppenhaltigen Verbindung tritt häufig schon beim Vermischen dieser Materialien ein. Es kann aber gegebenenfalls eine Erwärmung auf mäßig erhöhte Temperaturen wünschenswert sein, z. B. auf 50 bis 150 °C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eines ausreichende Zeit zu erhöhen, um eine vollständige Umsetzung sicherzustellen.

Für die Umsetzung mit der epoxyhaltigen Verbindung sollte mindestens eine solche Menge an Amin verwendet werden, daß das Harz einen kationischen Charakter annimmt, d. h. daß es unter dem Einfluß einer Spannung in dem Beschichtungsbad zu der Kathode wandert, wenn es durch Zugabe einer Säure löslich gemacht worden ist. Es können im wesentlichen alle Epoxygruppen des Harzes mit einem Amin umgesetzt werden. Es ist aber auch möglich, überschüssige Epoxygruppen in dem Harz zu belassen, die bei der Berührung mit Wasser unter Bildung von Hydroxylgruppen hydrolisieren.

Die bevorzugten Amine sind Monoamine oder Polyamine, die eine sekundäre Aminogruppe enthalten. Ebenfalls bevorzugt sind Mischungen verschiedener Amine. Es können jedoch mit gutem Erfolg auch Polyamine, wie Ethylendiamin, Diethylentriamin, Triethylentetraamin, N-(2-Aminoethyl-)ethanolamin und Piperazin verwendet werden, obwohl ihre Benutzung in großen Mengen nicht bevorzugt ist, da sie multifunktionell sind und eine größere Neigung zur Bildung einer gelierten Reaktionsmischung haben als Monoamine.

Wenn Polyamine oder primäre Amine verwendet werden, sollten besondere Vorsichtsmaßnahmen getroffen werden, um die Gelierung zu vermeiden. Es kann zum Beispiel ein Überschuß an Amin benutzt werden und der Überschuß kann nach Beendigung der Umsetzung im Vakuum abgetrieben werden.

Außerdem kann das Polyepoxid zu dem Amin zugegeben werden, um sicherzustellen, daß ein Überschuß an Amin vorhanden ist.

Beispiele von geeigneten hydroxylhaltigen Aminen sind Alkanolamine, Dialkanolamine, Trialkanolamine, Alkylalkanolamine, Arylalkanolamine und Arylalkylalkanolamine, die in der Regel 2 bis 18 Kohlenstoffatome in den Alkanol-, Alkyl- und Arylketten enthalten. Spezifische Beispiele sind Ethanolamin, N-Methylethanolamin, Diethanolamin, N-Phenylethanolamin, N,N-Dimethylethanolamin, N-Methyldiethanolamin und Triethanolamin.

Es können auch solche Amine wie Hydrazin und Propylenimin verwendet werden. Ammoniak ist im Sinne dieser Erfindung ebenfalls ein Amin, das verwendet werden kann.

Eine weitere Möglichkeit, die erforderliche Wasserdispergierbarkeit zu erzielen, besteht darin, als Komponente C Mannich-Basen, d. h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemittel gleichzeitig selbstvernetzbar. Als spezifisches Beispiel sei 2.4.6-Tri(dimethylaminomethyl)-phenol genannt.

Das Reaktionsprodukt der Amine mit dem Polyepoxid erhält seinen kationischen Charakter durch mindestens partielle Neutralisation mit einer Säure. Beispiele von geeigneten Säuren sind organische und anorganische Säuren, wie Ameisensäure, Essigsäure, Milchsäure, Phosphorsäure und Kohlensäure. Der Grad der Neutralisation hängt von dem speziellen Produkt ab. Im allgemeinen ist es nur erforderlich, so viel Säure zuzugeben, daß das Produkt in Wasser dispergiert werden kann. Typischerweise ist eine derartige Menge der Säure ausreichend, damit mindestens 30 % des gesamten theoretischen Neutralisationsgrades erreicht wird. Es kann auch so viel Säure verwendet werden, daß der theoretische Neutralisationsgrad von 100 % überschritten wird.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kann vorteilhaft dadurch erhalten werden, daß das Bindemittel mit einem teilblockierten Polyisocyanat umgesetzt wird, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren. Das Bindemittel kann durch den Einsatz der bereits beschriebenen Mannich-Basen als Komponente D selbstvernetzbar sein.

Häufig angewandte Methoden zur Vernetzung von Bindemitteln sind z. B. in folgenden Offenlegungsschriften publiziert: DE-OS 20 57 799, europäische Patentanmeldungen 12 463 und 4 090 und DE-OS 27 52 256.

Wenn Vernetzungsmittel benutzt werden, machen sie in der Regel etwa 5 bis etwa 60 Gewichts-% des Bindemittels aus.

Bevorzugt sind etwa 20 bis etwa 40 Gewichts-% des Bindemittels.

Beispiele von geeigneten Aminoplastvernetzungsmitteln sind der Triethyltrimethylether von Hexamethylolmelamin, der Hexabutylether von Hexamethylolmelamin und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und einen Aldehyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300 °C, aber reagiert. Bei der Herstellung der blockierten Polyisocyanate können beliebige, für die Vernetzung geeignete organische Polyisocyanate, verwendet werden.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Andere geeignete Blockierungsmittel sind Hydroxylamine.

Eine weitere geeignete Klasse von Vernetzungsmitteln basiert auf polyfunktionellen aktivierten Estern wie beispielsweise β-Hydroxyalkylestern. Solche Vernetzungsmittel stellen im wesentlichen nichtsaure gesättigte und/oder ungesättigte Polyester dar, die durch Umsetzung von Polycarbonsäuren oder sauren Polyestern mit Monoepoxidverbindungen erhalten werden. Solche Vernetzungsmittel sind der der europäischen Patentanmeldung 12 463 beschrieben.

Die Erfindung betrifft auch ein Verfahren zur Herstellung wasserdispergierbarer Bindemittel für kathodisch abscheidbare Elektrotauchlacke auf der Basis von modifizierten Epoxid-Amin-Addukten,

dadurch gekennzeichnet, daß sie Reaktionsprodukte von

(A) Polyepoxiden mit einer Epoxidäquivalenz von größer als eins,
(B) Diphenylolalkansäureestern und
(C) Aminen

sind.

Die Erfindung betrifft ferner die Verwendung der Bindemittel für Elektrotauchbäder.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kann vorteilhaft dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren.

Um dem Kunstharz für die elektrische Abscheidung einen ausreichenden kationischen Charakter zu verleihen, wird im allgemeinen der neutralisierbare Stickstoff pro Gramm der gesamten Harzfeststoffe bevorzugt zwischen 0,3 und 3 Milliäquivalenten gehalten.

Wäßrige Dispersionen der erfindungsgemäßen Kunstharzprodukte sind als Überzugsmassen sehr geeignet, insbesondere für die Herstellung von Überzügen durch elektrische Abscheidung. Die Überzugsmassen können aber auch in konventioneller Art und Weise auf die Substrate aufgebracht werden. Für die Dispergierung in Wasser werden die harzartigen Produkte neutralisiert, um kationische Gruppen zu bilden, z. B. Salze von tertiären Aminen und, im Falle von hydrolisierten ketiminhaltigen Harzen, Salze von primären Aminen.

Die Neutralisierung der Produkte wird durch Umsetzung eines Teils oder aller Aminogruppen durch eine wasserlösliche Säure, z. B. Ameisensäure, Essigsäure oder Phosphorsäure erreicht. Der Grad der Neutralisation hängt von dem besonderen Harz ab und es ist im allgemeinen ausreichend, daß nur so viel Säure zugesetzt wird, daß das Harz in Wasser dispergierbar ist.

Die Konzentration der harzartigen Produkte in dem wäßrigen Medium hängt von den zu verwendenden Verfahrensparametern ab und ist in der Regel nicht kritisch. Üblicherweise bildet Wasser den Hauptanteil der wäßrigen Dispersion. Die wäßrige Dispersion kann z. B. etwa 5 bis etwa 50 Gew.-% Harzfeststoffe enthalten.

Außer Wasser kann das wäßrige Medium ein koaleszierendes Lösungsmittel enthalten. Durch die Mitverwendung eines koaleszierenden Lösungsmittels wird in manchen Fällen ein besonderes Aussehen des Films erreicht. Solche Lösungsmittel schließen Kohlenwasserstoffe, Alkohole, Ester, Ether und Ketone ein. Die bevorzugten koaleszierenden Lösungsmittel sind Monoalkohole, Glykole und Polyole und auch Ketone und Etheralkohole. Spezifische koaleszierende Lösungsmittel sind Isopropanol, Butanol, Isophoron, 4-Methoxy-methylpentanol-2, Ethylen- und Propylenglykol, Monoethyl-, Monobutyl- und Monohexyl-ether von Ethylenglykol und 2-Ethylhexanol. Die Menge des koaleszierenden Lösungsmittels ist nicht kritisch und im allgemeinen werden zwischen etwa 0,1 und 40 Gew.-%, bevorzugt etwa 0,5 bis 25 Gew.-%, bezogen auf das Gesamtgewicht des wäßrigen Mediums, verwendet.

In den meisten Fällen enthält die wäßrige Dispersion auch Pigmente und andere übliche Zusätze wie oberflächenaktive Mittel. Es können die üblichen Pigmente verwendet werden wie Eisenoxide, Bleioxide, Strontiumchromat, Ruß, Kohlenstaub, Titandioxid, Talkum, Bariumsulfat und farbige Pigmente wie Cadmium-gelb, Cadmium-rot, Chromgelb und dergleichen. Der Pigmentgehalt der Dispersion wird in der Regel als Verhältnis von Pigment zu Harz ausgedrückt. Bei der Erfindung liegt das Pigment zu Harzverhältnis in der Regel im Bereich von 0,01 bis 5 : 1. Andere übliche Zusatzstoffe können in der Dispersion in der Regel in Mengen von etwa 0,01 bis 3 Gew.-% bezogen auf das Gesamtgewicht der Harzfeststoffe vorhanden sein.

Bei der elektrischen Abscheidung der erfindungsgemäßen Kunstharze werden diese in wäßriger Dispersion im Kontakt mit einer elektrisch leitenden Anode und einer elektrisch leitenden Kathode gebracht, wobei die Kathode die zu überziehende Oberfläche ist. Während der Berührung mit der wäßrigen Dispersion wird beim Anlegen einer Spannung zwischen den Elektroden ein haftender Film der Überzugsmasse auf der Kathode abgeschieden.

Die Bedingungen, unter denen die elektrische Abscheidung erfolgt, sind im allgemeinen denjenigen ähnlich, die zur elektrischen Abscheidung von anderen Überzugsmassen verwendet werden. Üblicherweise liegt die Spannung zwischen etwa 50 und 500 Volt.

Es ist vorteilhaft, daß die Dispersion während der elektrischen Abscheidung ein pH zwischen 3 und etwa 9 hat.

Die elektrische Abscheidung der erfindungsgemäßen Kunstharze kann auf beliebigen leitfähigen Substraten, insbesondere Metallen wie Stahl, Aluminium, Kupfer oder Magnesium erfolgen. Nach der elektrischen Abscheidung kann der Überzug durch Erwärmen auf erhöhte Temperaturen gehärtet werden. Hierfür kommen in der Regel Temperaturen von 90 bis 200 °C und Zeiträume von 1 bis 30

Minuten in Betracht.

Um eine rasche und vollständige Härtung sicherzustellen, ist es manchmal vorteilhaft, einen Katalysator in der Überzugsmasse zu haben. Die Menge des verwendeten Katalysators sollte ausreichend sein, um die Härtung des abgelagerten Films zu beschleunigen. Typische Mengen sind Mengen von etwa 0,05 Prozent bezogen auf das Gewicht der gesamten Harzfeststoffe. In der Regel werden etwa 2 Gew.-% eines solchen Katalysators verwendet. Wenn jedoch die Härtungstemperaturen hoch genug sind, kann auf den Katalysator verzichtet werden.

Die Erfindung betrifft also auch ein Verfahren zum elektrophoretischen Beschichten eines elektrisch leitenden als Kathode geschalteten Subs-rats aus einem wäßrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, dadurch gekennzeichnet, daß die Bindemittel Reaktionsprodukte von

(A) Polyepoxiden mit einer Epoxidäquivalenz von größer als ein,
(B) Diphenylolalkansäureestern und
(C) Aminen

sind.

In den folgenden Beispielen wird die Erfindung näher erläutert. Alle Angaben über Teile und Prozentsätze sind sowohl in den Beispielen als auch in der Beschreibung Gewichtsangaben, falls nicht etwas anderes festgestellt wird.

I. Darstellung der Diphenylolalkansäureester

Komponente B1 :

In einem mit Wasserabscheider versehenen Reaktor werden 1 860 Teile 4,4-Bis (hydroxyphenyl)valeriansäure zusammen mit 1 185 Teilen 2-Ethylhexanol und 80 Teilen Xylol auf 180 °C aufgeheizt, wobei unter Wasserabspaltung die Veresterung eintritt. Nachdem 100 Teile Wasser ausgekreist sind, wird die Temperatur auf 200 °C gesteigert. Nachdem sich insgesamt 115 Teile Wasser gebildet haben, werden unter reduziertem Druck die flüchtigen Anteile abdestilliert. Man verdünnt anschließend mit Xylol auf einen Festkörper von 90 %. Das Produkt besitzt eine Restsäurezahl von 1 mg KOH/g.

Komponente B2 :

In analoger Weise bringt man 674 Teile Hydroxypivaloylneopentylglykol und 1 840 Teile 4,4-Bis (hydroxyphenyl)valeriansäure in Gegenwart von 120 Teilen Xylol und 1 Teil p-Toluolsulfonsäure zur Umsetzung. Nach Abspaltung von 110 Teilen Wasser wird das Restwasser und das Lösungsmittel, in Vakuum abdestilliert. Das Festharz wird anschließend mit gleichen Teilen Xylol und Isopropanol auf einen Festkörper von 80 % eingestellt. Das Produkt hat eine Säurezahl von 5 mg KOH/g und besitzt vier Phenylolgruppen im Molekül.

Komponente B3 :

In einem geeigneten Reaktionsgefäß werden 500 Teile 2-Ethylhexanol mit 1 345 ε-Caprolacton in Gegenwart von 7 Teilen Dibutylzinndilaurat bei 160 °C umgesetzt. Nach 2 Stunden Reaktionszeit werden 1 085 Teile 4,4-Bis (hydroxyphenyl)-valeriansäure und 70 Teile Xylol eingetragen, wonach die Veresterung beginnt. Das Veresterungswasser wird über einen Wasserabscheider ausgekreist. Im Verlauf von 2 Stunden wird die Temperatur auf 190 °C gesteigert und dort gehalten bis die theoretische Wassermenge (68 Teile) annähernd erreicht ist. Anschließend destilliert man geringe Mengen flüchtiger Anteile ab, läßt abkühlen und verdünnt mit 300 Teilen Xylol auf einen Festkörper von 90 %. Das Produkt hat eine Phenylolfunktionalität von 2 und ein Phenyloläquivalentgewicht von 375.

II. Herstellung der erfindungsgemäßen wasserdispergierbaren Bindemittel.

Beispiel 1

Aus 1 098 Teilen eines handelsüblichen Epoxidharzes auf Basis Bisphenol A mit einem Epoxidäquivalentgewicht von 188 und 650 Teilen der Komponente B1 werden in Gegenwart von 25 Teilen Xylol die enthaltenen Wasserspuren durch Auskreisen im Vakuum entfernt. Nach Zugabe von 166 Teilen Bisphenol A und 2 Teilen Ethyltriphenylphosphoniumacetat wird die Reaktionsmischung auf 160 °C erhitzt. Eine Überprüfung des Epoxidäquivalentgewichts ergibt nach 1 Stunde den Wert 1 300. Nach Kühlung auf 90 °C werden 106 Teile Diethanolamin und 66 Teile eines Umsetzungsproduktes aus äquimolaren Mengen Diethylaminoethylamin und Butylenoxid beigefügt, wonach die Reaktionstemperatur auf 110 °C steigt. Man hält noch 90 Minuten bei dieser Temperatur und verdünnt anschließend mit 310 Teilen

Methylisobutylketon und 100 Teilen Hexylglykol. Es resultiert ein klares Harz mit einem Festgehalt von 85 %.

Beispiel 2

Ein mit geeigneter Zusatzausstattung versehener Reaktor wird mit 1984 Teilen eines festen Epoxidharzes auf Basis von Bisphenol A mit einem Epoxidäquivalentgewicht von 496 und 320 Teilen Xylol beschickt. Die Mischung wird auf 100 °C aufgeheizt, und darin enthaltene Wasserspuren werden unter reduziertem Druck ausgekreist. Nach Hinzufügen von 810 Teilen der Komponente B3 und 2 Teilen Ethyltriphenylphosphoniumjodid wird das Reaktionsgemisch innerhalb 2 Stunden bei 135 °C zur Umsetzung gebracht. Das anschließend bestimmte Epoxidäquivalentgewicht von 1 300 zeigt einen praktisch vollständigen Einbau der Komponente B3 an. Eine Verlängerung der Reaktionszeit um 1 weitere Stunde führt zu einem Epoxidäquivalentgewicht von 1 310. Die Verlängerung der Reaktionszeit um 50 % zeigt das Erliegen der Reaktion an und ist ein Beleg für die Produktionssicherheit der erfindungsgemäßen Bindemittel, da konkurrierende Nebenreaktionen offensichtlich auf eine Minimum reduziert sind. Sodann läßt man auf 100 °C abkühlen und gibt 157 Teile Diethanolamin und 65 Teile N-(2-hydroxyethyl)piperazin zu. Nach kurzer Exothermie wird die Reaktion 90 Minuten bei 100 °C fortgeführt. Nach Verdünnen mit 150 Teilen Hexylglykol resultiert ein klares Harz mit einer Viskosität von 430 mPas (40 %-ig in Propylenglykolmethylether) und einem Festkörper von 85 %.

Beispiel 3

935 Teile der Komponente B2 werden mit 375 Teilen Versaticsäureglyoidylester (Epoxidäquivalentgewicht 250) unter Zusatz von 1 Teil Zinn-II-octoat bei 140 °C umgesetzt. Nach 2 Stunden ist kein Epoxid mehr nachweisbar. Nacheinander werden 1 984 Teile eines Epoxidharzes auf Basis Bisphenol A mit einem Epoxidäquivalentgewicht von 496 und 188 Teile eines flüssigen Epoxidharzes auf Basis Bisphenol A mit einem Epoxidäquivalentgewicht von 188 in die Reaktionsmischung eingetragen. Die Temperatur wird wieder auf 140 °C gesteigert, während flüchtige Anteile und Wasserspuren aus dem Epoxidharz kontinuierlich abdestilliert werden. Man gibt 175 Teile Xylol und 7 Teile Zinn-II-octoat zu und schaltet auf Rückfluß. Nach 3 Stunden ist ein Epoxidäquivalentgewicht von 1 320 erreicht. Die Reaktionsmischung wird gekühlt mit 157 Teilen Diethanolamin und 75 Teilen N-Methylethanolamin versetzt und 90 Minuten bei 105 °C gehalten. Anschließend wird mit 440 Teilen Methylisobutylketon, 200 Teilen Isobutanol und 210 Teilen Butylglykol verdünnt. Das Produkt hat eine Aminzahl von 40 mg KOH/g und einen Festkörper von 78 %.

III. Einsatz der erfindungsgemäßen Bindemittel in hitzehärtbaren Überzugsmitteln und Herstellung von wäßrigen Bindemitteldispersionen.

Die erfindungsgemäßen Bindemittel können neben dem Einsatz in kathodischen Elektrotauchlacken auch in üblicher Weise als Überzugsmittel verwendet werden, zum Beispiel durch Gießen, Tauchen, Sprühen oder Aufwalzen. Um hochbeständige Überzüge zu erhalten, ist es vorteilhaft, die Bindemittel durch Zumischen eines Vernetzungsmittels über eine chemische Reaktion zu härten. Im folgenden sind Beispiele von Vernetzungsmitteln aufgeführt, mit denen die erfindungsgemäßen Bindemittel bei Raumtemperatur stabile Mischungen bilden und beim Erhitzen vernetzen.

Vernetzer 1

Gemäß der DE-A-27 01 002, Beispiel 1, wird ein geblockter Isocyanatvernetzer (Polyurethanvernetzer) hergestellt, indem 218 Teile 2-Ethylhexanol langsam zu 291 Teilen einer 80/20-Isomermischung von 2,4-2,6-Toluylendiisocyanat unter Rühren und in einer Stickstoffatmosphäre gegeben werden, wobei die Reaktionstemperatur durch äußere Kühlung unter 38 °C gehalten wird. Der Ansatz wird noch eine weitere halbe Stunde bei 38 °C gehalten und dann auf 60 °C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121 °C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Vernetzer 2

Gemäß der EP-A-0 040 867 Beispiel 2 d) wird ein Polyestervernetzer hergestellt: 192 Teile Trimellithsäureanhydrid und 500 Teile Versaticsäureglycidylester, mit einem Epoxidäquivalentgewicht von 250 werden vermischt und unter Rühren auf 100 °C erwärmt. Es tritt eine exotherme Reaktion auf, und die Temperatur steigt auf 190 °C. Nach Abkühlen auf 140 °C werden 2 Teile Benzyldimethylamin zugegeben. Die Mischung wird 3 Stunden bei 140 °C gehalten. Es entsteht ein viskoses, klares Produkt, das zusätzlich mit 295 Teilen Ethylenglykolmonobutylether verdünnt wird.

Vernetzer 3

Ein Vernetzungsmittel, das vernetzungsaktive β-Alkoxyalkylestergruppen trägt, wird folgendermaßen hergestellt:

In einem wärmeträgerölbeheizbaren Reaktionsgefäß mit Wasserabscheider, Rückflußkühler und zwischengeschalteter Raschig-Kolonne werden 1 462 g Hexylglykol (10 mol) vorgelegt und unter Inertgaszufuhr und Rühren 1 000 g Bernsteinsäureanhydrid (10 mol) eingetragen. Die Reaktionsmischung wird auf 120 °C aufgeheizt, wobei die exotherme Wärmetönung die Temperatur kurzzeitig auf 130 °C anhebt. Die Temperatur wird gehalten bis die Säurezahle 230 mg KOH/g beträgt.

Anschließend werden 400 g Xylol, 5 g N-Cetyl-N,N,N-trimethylammoniumbromid und 940 g eines Bisphenol A-Epoxidharzes mit einem Epoxyäquivalentgewicht von 188 (2,5 mol) zugegeben. Die Temperatur wird innerhalb von 1 Stunde wieder auf 130 °C angehoben und dort gehalten bis der Epoxidwert auf null abgesunken ist. Nach Zugabe von 2 g p-Toluolsulfonsäurelösung (25 %-ig in n-Propanol) wird die Temperatur innerhalb von 4 Stunden auf 200 °C gesteigert, während das entstandene Reaktionswasser kontinuierlich ausgekreist wird. Nach weiterer Steigerung auf 220 °C wird die Temperatur gehalten, bis annähernd 90 g Wasser abgeschieden sind, und die Säurezahl auf unter 2 mg KOH/g Festharz abgesunken ist. Sodann wird gekühlt und ohne Verdünnung ausgetragen.

Festkörper: 95,2 Gew.-% (gemessen nach 1-stündigem Erhitzen auf 130 °C)
Säurezahl: 1.1 mg KOH/g Festharz
Viskosität: 480 mPas (gemessen nach Verdünnen mit Methyl-Isobutylketon auf 70 Gew.-% bei 25 °C)

Beispiel 4

Das Beispiel erläutert die Verwendung der erfindungsgemäßen Bindemittel als organisch gelöste Systeme für übliche Applikationsverfahren. Aus nachfolgend genannten Komponenten wird eine Klarlacklösung mit 50 % Festgehalt zubereitet, und der Klarlack wird mit einer Naßfilmschichtdicke von 50 Mikrometer auf zinkphosphatiertes Stahlblech aufgerakelt und anschließend für 20 Minuten bei 160 °C eingebrannt.

| | |
|---|---|
| Harz aus Beispiel 2 | 41,2 Teile |
| Vernetzer 3 | 15,8 Teile |
| Blei-II-octoat-Lösung+) | 1,5 Teile |
| Propylenglykolmethylether | 41,5 Teile |
| | 100,0 Teile |

+) handelsübliche Katalysatorlösung mit 24 % Bleigehalt.

Man erhält einen glattverlaufenden Klarlackfilm, der nach 50-maligem Hin- und Herreiben mit einem mit Methylisobutylketon getränkten Wattebausch keine Angriffsspuren zeigt. Die Schlagtiefungsprüfung weist mit 160 (in × 1b) eine ausgezeichnete Flexibilität aus.

Beispiel 5

Das Beispiel beschreibt die Herstellung einer wäßrigen Bindemitteldispersion.

922 Teile des Harzes aus Beispiel 1, 480 Teile der Vernetzerlösung 1, 8 Teile Dibutylzinndilaurat, 2 Teile Entschäumerlösung und 13,2 Teile Eisessig werden gemischt und mit 611 Teilen entionisiertem Wasser versetzt. Die viskose Dispersion wird 20 Minuten lang homogenisiert, bevor mit weiteren 1965 Teilen entionisiertem Wasser portionsweise verdünnt wird. Es resultiert eine niedrigviskose wäßrige Dispersion, die nach anschließender Filtration folgende Kennwerte aufweist:

| | |
|---|---|
| Festkörper (60', 130 °C) | 28,8 % |
| MEQ-Base | 0,62 |
| MEQ-Säure | 0,20 |

Beispiel 6

Das Beispiel beschreibt die Herstellung einer wäßrigen Bindemitteldispersion. Es wird im wesentlichen gleich verfahren wie in Beispiel 5. Dibutylzinndilaurat wird gegen Blei-II-octoat ausgetauscht.

| | |
|---|---|
| Harz aus Beispiel 2 | 922 Teile |
| Vernetzer 3 | 353 Teile |
| Blei-II-octoat-Lösung | 28 Teile |

| | |
|---|---|
| Entschäumerlösung | 2 Teile |
| Eisessig | 13,5 Teile |
| entionisiertes Wasser | 922 Teile |
| entionisiertes Wasser | 1160 Teile |

Die Dispersion wird nach ihrer Herstellung einer kurzzeitigen Vakuumdestillation bei 60 °C unterworfen, bei der 75 Teile organische Phase aus dem Destillat abgetrennt werden. Die Dispersion weist nach der Filtration folgende Kennwerte auf :

| | |
|---|---|
| Festkörper (60', 130 °C) | 35,8 % |
| MEQ-Base | 0,58 |
| MEQ-Säure | 0,20 |

Beispiel 7

Das Beispiel beschreibt eine weitere wäßrige Bindemitteldispersion. Die Herstellung erfolgt analog den vorherigen Beispielen.

| | |
|---|---|
| Harz aus Beispiel 3 | 1033 Teile |
| Vernetzer 2 | 447 Teile |
| Blei-II-octoat-Lösung | 28 Teile |
| Entschäumerlösung | 2 Teile |
| 10 % ige wäßrige Essigsäurelösung | 155 Teile |
| entionisiertes Wasser | 1133 Teile |
| entionisiertes Wasser | 1680 Teile |

Die filtrierte Dispersion hat folgende Kennwerte :

| | |
|---|---|
| Festkörper (30', 150 °C) | 25,2 % |
| MEQ-Base | 0,51 |
| MEQ-Säure | 0,23 |

IV. Zubereitung der Elektrotauchbäder und Abscheidung von Lackfilmen

Zur Prüfung als kathodische Elektrotauchlacke werden die vorstehend beschriebenen wäßrigen Bindemitteldispersionen mit entionisiertem Wasser auf einen Festkörper von 25 % eingestellt. Zu 1 000 Teilen der jeweiligen Bindemitteldispersion werden unter Rühren 165 Teile der nachfolgend beschriebenen Pigmentpaste eingetragen. Anschließend wird der Badfestkörper mit entionisiertem Wasser auf 20 % (30', 150 °C) reduziert.

Pigmentpaste

Nach Beispiel 1a) der DE-OS 31 21 765 wird ein Pastenbindemittel hergestellt. Dazu werden in einem Reaktionsgefäß 200 Teile Ethylenglykolmonobutylether auf 90 °C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschließend wird 1 Stunde lang bei 90 °C nachpolymerisiert. Das resultierende Lösungspolymerisat hat einen K-Wert nach Fikentscher von 24. Der Festkörpergehalt der Copolymerisatlösung beträgt 76 %.

In einer Rührwerksmühle werden 250 Teile der obigen Copolymerisatlösung, 210 Teile Ethylenglykolmonobutylether, 555 Teile Ethylenglykolmonoethylether, 837 Teile Wasser, 1 084 Teile Kaolin, 217 Teile basisches Bleisilikat, 145 Teile Ruß, 36 Teile Rutil und 3 000 Teile Glasperlen von einem Durchmesser von 2 mm 45 Minuten bei einer Drehzahl von 1 000 Umdrehungen/Minute gerührt. Nach dem Abtrennen der Glasperlen wird eine Schwarzpaste mit einem Festgehalt von 50,6 % erhalten.

Man läßt die Elektrotauchbäder 3 Tage bei 30 °C unter Rühren altern. Die Abscheidung der Lackfilme erfolgt während 2 Minuten auf kathodisch geschalteten zinkphosphatierten Stahlprüftafeln bei der angegebenen Spannung. Die Badtemperatur beträgt hierbei 27 °C. Die abgeschiedenen Naßfilme werden mit entionisiertem Wasser nachgespült und während 20 Minuten bei 180 °C bzw. 160 °C eingebrannt

(Siehe Tabelle Seite 12 f.)

| Lack gemäß | | Beispiel 5 | Beispiel 6 | Beispiel 7 |
|---|---|---|---|---|
| Abscheidespannung | V | 350 | 400 | 300 |
| Filmdicke | µm | 16 | 21 | 18 |
| Umgriff nach FORD | cm (V) | 21 (400) | 23 (400) | 20 (320) |
| Verlauf +) | | 1 | 1 | 1,5 |
| Gitterschnitt +) | | 0 | 0 | 0 |
| Erichsen-Tiefung | mm | 6,5 | 10,0 | 5,6 |
| Schlagtiefung | (in x lb) | 110 | 180 | 90 |
| Vernetzung ++) | | 0 | 0 | 0 |
| Einbrenntemperatur | ° C | 180 | 160 | 160 |

+) 0 bester Wert, 5 schlechtester Wert
++) 20 Doppelhübe mit einem mit MIBK getränkten Wattebausch
0 = kein Angriff der Oberfläche

**Patentansprüche**

1. Wasserdispergierbare, säureneutralisierte, kathodisch abscheidbare Bindemittel auf der Basis von modifizierten Epoxid-Amin-Addukten, dadurch gekennzeichnet, daß die Bindemittel hergestellt worden sind durch

I) Umsetzen von

(A) Polyepoxiden mit einer Epoxidäquivalenz größer als 1 und einem mittleren Molekulargewicht $\bar{M}_n$ von 140 bis 5 000 mit

(B) Diphenylolalkansäureestern und

(C) Aminen

zu einem modifizierten Epoxidharz und

II) Protonisierung dieses Zwischenproduktes aus (I) mit einer wasserlöslichen Säure.

2. Bindemittel nach Anspruch 1, dadurch gekennzeichnet, daß die Komponente A ein Polyglycidylester ist.

3. Bindemittel nach Anspruch 1, dadurch gekennzeichnet, daß die Komponente A ein Polyglycidylether ist.

4. Bindemittel nach Anspruch 1, dadurch gekennzeichnet, daß die Komponente A ein Epoxidharz auf Basis Bisphenol A ist.

5. Bindemittel nach Anspruch 1-4, dadurch gekennzeichnet, daß die Komponente B ein Veresterungsprodukt aus einer Diphenylolalkansäure und einer hydroxylgruppenhaltigen Verbindung ist.

6. Bindemittel nach Anspruch 5, dadurch gekennzeichnet, daß die Diphenylolalkansäure Bis(hydroxyphenyl) essigsäure ist.

7. Bindemittel nach Anspruch 5, dadurch gekennzeichnet, daß die Diphenylolalkansäure 4,4-Bis(hydroxyphenyl) valeriansäure ist.

8. Bindemittel nach Anspruch 5-7, dadurch gekennzeichnet, daß die hydroxylgruppenhaltige Verbindung ein gesättigter und/oder ungesättigter Alkohol ist.

9. Bindemittel nach Anspruch 8, dadurch gekennzeichnet, daß der Alkohol ein verzweigter Alkohol mit mehr als 4 Kohlenstoffatomen ist.

10. Bindemittel nach Anspruch 5-7, dadurch gekennzeichnet, daß die hydroxylgruppenhaltige Verbindung ein Diol ist.

11. Bindemittel nach Anspruch 5-7, dadurch gekennzeichnet, daß die hydroxylgruppenhaltige Verbindung ein im Mittel monofunktioneller Polyesteralkohol ist.

12. Bindemittel nach Anspruch 1-11, dadurch gekennzeichnet, daß bis zu 75 % der Phenylolgruppen der Komponente B mit Monoepoxiden verethert sind.

13. Bindemittel nach Anspruch 1-12, dadurch gekennzeichnet, daß das Amin ein primäres und/oder ein sekundäres und/oder ein tertiäres Amin oder eine Mischung der genannten Amine ist.

14. Bindemittel nach Anspruch 13, dadurch gekennzeichnet, daß das Amin ein Alkanolamin ist.

15. Bindemittel nach Anspruch 13, dadurch gekennzeichnet, daß das Amin ein Polyamin ist.

16. Bindemittel nach Anspruch 15, dadurch gekennzeichnet, daß das Polyamin mindestens eine sekundäre und eine oder weitere tertiäre Aminogruppen und gegebenenfalls noch Hydroxylgruppen enthält.

17. Bindemittel nach Anspruch 1-16, dadurch gekennzeichnet, daß es in Kombination mit einem Härtungsmittel vorliegt.

18. Verfahren zur Herstellung wasserdispergierbarer, säureneutralisierter, kathodisch abscheidbarer Bindemittel auf der Basis von modifizierten Epoxid-Amin-Addukten, dadurch gekennzeichnet, daß

I) (A) Polyepoxide mit einer Epoxidäquivalenz größer als 1 und einem mittleren Molekulargewicht $\bar{M}_n$ von 140 bis 5 000 mit

(B) Diphenylolalkansäureestern und

(C) Aminen

zu einem modifizierten Epoxidharz umgesetzt werden und

II) dieses Zwischenprodukt aus (I) mit einer wasserlöslichen Säure protonisiert wird.

19. Verwendung der Bindemittel nach Anspruch 1-17 für hitzehärtbare Überzugsmittel, dadurch gekennzeichnet, daß die Bindemittel gegebenenfalls zusätzlich Vernetzungsmittel, Pigmente, Verlaufsmittel und andere übliche Hilfsmittel enthalten.

20. Verfahren zum elektrophoretischen Beschichten eines elektrisch leitenden, als Kathode geschalteten Substrates aus einem wäßrigen Bad auf Basis mindestens teilweise mit Säuren neutralisierter kationischer Bindemittel nach Anspruch 1-17, wobei das Bad gegebenenfalls zusätzlich ein Vernetzungsmittel enthält.

**Claims**

1. Water-dispersible acid-neutralized binders which can be deposited cathodically and are based on modified epoxide/amine adducts, characterized in that the binders have been prepared by

I) reacting

(A) polyepoxides having an epoxide equivalent greater than 1 and a mean molecular weight $M_n$ of 140 to 5,000 with

(B) diphenylolalkanoate esters and

(C) amines to give a modified epoxy resin and

II) protonizing this intermediate product from (I) with a water-soluble acid.

2. Binder according to Claim 1, characterized in that component A is a polyglycidyl ester.

3. Binder according to Claim 1, characterized in that component A is a polyglycidyl ether.

4. Binder according to Claim 1, characterized in that component A is an epoxide resin based on bisphenol A.

5. Binder according to any of Claims 1-4, characterized in that component B is an esterification product of a diphenylolalkanoic acid and a compound containing hydroxyl groups.

6. Binder according to Claim 5, characterized in that the diphenylolalkanoic acid is bis-(hydroxyphenyl)-acetic acid.

7. Binder according to Claim 5, characterized in that the diphenylolalkanoic acid is 4,4-bis-(hydroxyphenyl)-valeric acid.

8. Binder according to any of Claims 5-7, characterized in that the compound containing hydroxyl groups is a saturated and/or unsaturated alcohol.

9. Binder according to Claim 8, characterized in that the alcohol is a branched alcohol having more than 4 carbon atoms.

10. Binder according to any of Claims 5-7, characterized in that the compound hydroxyl groups is a diol.

11. Binder according to any of Claims 5-7, characterized in that the compound containing hydroxyl groups is a polyester-alcohol which on average is monofunctional.

12. Binder according to any of Claims 1-11, characterized in that up to 75 % of the phenylol groups of component B are etherified with mono-epoxides.

13. Binder according to any of Claims 1-12, characterized in that the amine is a primary and/or secondary and/or tertiary amine or a mixture of the said amines.

14. Binder according to Claim 13, characterized in that the amine is an alkanolamine.

15. Binder according to Claim 13, characterized in that the amine is a polyamine.

16. Binder according to Claim 15, characterized in that the polyamine contains at least one secondary and one or more tertiary amino groups and can also contain hydroxyl groups.

17. Binder according to any of Claims 1-16, characterized in that it is a combination with a curing agent.

18. Process for preparing water-dispersible acid-neutralized binders which can be deposited cathodically and are based on modified epoxide/amine adducts, characterized in that

I) (A) polyepoxides having an epoxide equivalent greater than 1 and a mean molecular weight $M_n$ of 140 to 5,000 are reacted with

(B) diphenylolalkanoate esters and

(C) amines to give a modified epoxy resin and

II) this intermediate product from (I) is protonized with a water-soluble acid.

19. Use of the binders according to any of Claims 1-17 for heat-curable surface-coatings, characterized in that the binder, if appropriate, additionally contains crosslinking agents, pigments, flow agents and other conventional assistants.

20. Process for electrophoretically coating an electrically conductive substrate, connected as the cathode, from an aqueous bath based on a cationic binder, according to any of Claims 1-17, at least partially neutralized with acids, the bath containing, if appropriate, a crosslinking agent in addition.

## Revendications

1. Liants aptes à se déposer à la cathode, neutralisés par un acide, dispersibles dans l'eau, à base de produits d'addition époxyde-amine modifiés, caractérisés par le fait qu'ils ont été obtenus par

I) réaction de :

(A) polyépoxydes présentant un équivalent en époxy supérieur à 1 et une masse moléculaire moyenne $\bar{M}_n$ allant de 140 à 5 000 avec

(B) des esters d'acides diphénylolalcanoïques et

(C) des amines,

pour donner une résine époxyde modifiée et

II) protonation de ce produit intermédiaire issu de (I) avec un acide soluble dans l'eau.

2. Liants selon la revendication 1, caractérisés par le fait que le composant A est un polyglycidylester.

3. Liants selon la revendication 1, caractérisés par le fait que le composant A est un polyglycidyléther.

4. Liants selon la revendication 1, caractérisés par le fait que le composant A est une résine époxyde à base de bisphénol A.

5. Liants selon l'une des revendications 1 à 4, caractérisés par le fait que le composant B est un produit d'estérification d'un acide diphénylolalcanoïque et d'un composé renfermant des groupes hydroxyle.

6. Liants selon la revendication 5, caractérisés par le fait que l'acide diphénylolalcanoïque est l'acide bis(hydroxyphényl)acétique.

7. Liants selon la revendication 5, caractérisés par le fait que l'acide diphénylolalcanoïque est l'acide bis(hydroxyphényl)-4,4 valérianique.

8. Liants selon l'une des revendications 5 à 7, caractérisés par le fait que le composé renfermant des groupes hydroxyle est un alcool saturé/ou insaturé.

9. Liants selon la revendication 8, caractérisés par le fait que l'alcool est un alcool ramifié renfermant plus de 4 atomes de carbone.

10. Liants selon l'une des revendications 5 à 7, caractérisés par le fait que le composé renfermant des groupes hydroxyle est un diol.

11. Liants selon l'une des revendications 5 à 7, caractérisés par le fait que le composé renfermant des groupes hydroxyle est un polyesteralcool en moyenne monofonctionnel.

12. Procédé selon l'une des revendications 1 à 11, caractérisé par le fait que jusqu'à 75 % des groupes phénylol du composant B sont éthérifiés par des monoépoxydes.

13. Liants selon l'une des revendications 1 à 12, caractérisés par le fait que l'amine est une amine primaire et/ou secondaire et/ou tertiaire ou un mélange des amines citées.

14. Liants selon la revendication 13, caractérisés par le fait que l'amine est une alcanolamine.

15. Liants selon la revendication 13, caractérisés par le fait que l'amine est une polyamine.

16. Liants selon la revendication 15, caractérisés par le fait que la polyamine renferme au moins un groupe amino secondaire et un groupe amino tertiaire ou davantage et éventuellement encore des groupes hydroxyle.

17. Liants selon l'une des revendications 1 à 16, caractérisés par le fait qu'il existe en combinaison avec un agent de durcissement.

18. Procédé de préparation de liants aptes à se déposer à la cathode, neutralisés par un acide, dispersibles dans l'eau, à base de produits d'addition époxyde amine modifiés, caractérisé par le fait que :

I) on fait réagir :

(A) des polyépoxydes présentant un équivalent en époxy supérieur à 1 et une masse moléculaire moyenne $\bar{M}_n$ allant de 140 à 5 000 avec

(B) des esters d'acides diphénylolalcanoïques et

(C) des amines,

pour donner une résine époxyde modifiée, et

II) on effectue la protonation de ce produit intermédiaire issu de (I) avec un acide soluble dans l'eau.

19. Utilisation des liants tels que définis à l'une des revendications 1 à 17 pour des agents de revêtement durcissables à la chaleur, caractérisée par le fait que les liants renferment le cas échéant, également des agents de réticulation, des pigments, des agents favorisant l'écoulement et d'autres additifs usuels.

20. Procédé pour le revêtement électrophorétique d'un substrat électriquement conducteur, monté en cathode, à partir d'un bain aqueux à base de liants cationiques au moins partiellement neutralisés par des acides, tels que définis à l'une des revendications 1 à 17, où le bain renferme le cas échéant également un agent de réticulation.